# EUROPÄISCHE PATENTANMELDUNG

(11) **EP 4 537 709 A1**
(43) Veröffentlichungstag der Anmeldung: **16.04.2025**
(21) Anmeldenummer: 23202496.8
(22) Anmeldetag: 09.10.2023
(51) Int. Cl.: A47C 7/02, A47C 23/00, A47C 27/06

(54) **FEDERELEMENT, FEDERANORDNUNG UND POLSTER**

(71) Anmelder: Out of the Door UG (haftungsbeschränkt), 72072 Tübingen (DE)
(72) Erfinder: SCHWARZ, Rune, 72764 Reutlingen (DE)
(74) Vertreter: Christ, Niko

(57) **Zusammenfassung**

Bekannte Federelemente mit verbundenen Federrahmen sollen dahingehend weiterentwickelt werden, dass eine Herstellung in einem allgemeinen Formgussverfahren und damit einfach und - nach Anschaffung eines geeigneten Werkzeugs - kostengünstig in großer Stückzahl möglich ist. Darüber hinaus soll sichergestellt sein, dass mit solchen Federelementen auch geeignete Polster mit einer möglichst guten Punktelastizität geschaffen werden können. Die hinterschneidungsfreie Geometrie eines einzelnen Federelements ermöglicht zudem die kostengünstige Herstellung von Spritzgusswerkzeugen für eine Federanordnung.

Dies gelingt, indem ein Federelement aus einer Mehrzahl von Federrahmen hergestellt wird, welche sich nach oben verjüngen. Soweit dabei die Federrahmen so konstruiert sind, dass deren Innenbereich höchstens gleich groß ist wie der nächst kleinere Federrahmen und diese überlappungsfrei zueinander positioniert werden, kann eine solche Konstruktion unkompliziert als einteiliges Spritzgussteil hergestellt werden. Weiter hat ein solches Federelement zahlreiche konstruktive Vorteile, wie vor allem, dass die gesamte Federanordnung als einteiliges Spritzgussteil hinterschneidungsfrei hergestellt werden kann.

## Beschreibung

Die vorliegende Erfindung betrifft ein Federelement bestehend aus einer Mehrzahl geschlossener, jeweils einen Innenbereich umschließender Federrahmen, welche ausgehend von einer Basis übereinander liegend zu einem Federkörper verbunden sind, eine Federanordnung umfassend eine Mehrzahl solcher Federelemente und ein Polster mit wenigstens einem Federelement und/oder wenigstens einer Federanordnung.

Derartige Federelemente, Federanordnungen und Polster sind im Stand der Technik bereits in großer Zahl bekannt. So sind beispielsweise aus der DE 298 07 170 U1 Federelemente bekannt, die aus einer Mehrzahl von wellenförmigen Federrahmen hergestellt sind, die übereinandergelegt sind, wobei sich deren Wellentäler den Wellenbergen darüber- oder darunterliegender Ebenen zuwenden, so dass eine netzartige Struktur entsteht. Ein solches Federelement soll bereits zuvor bekannte Federelemente hinsichtlich der Federeigenschaften verbessern, was durch die Verwendung eines besonders geeigneten, biegeelastischen Materials gelingt. Die Herstellung solcher Federelemente aus Kunststoff ist in diesem Zusammenhang besonders bevorzugt, wobei allerdings die Konstruktion vergleichsweise schwierig ist, da übereinanderliegende Bereiche realisiert werden.

Solche Federungen sind im Bereich von Wirtschaft und Technik bei Gegenständen mit einer mechanischen Schutzfunktion bekannt, die eine Federung, Dämpfung oder eine reine Verpackung bereitstellen sollen.

Ebenfalls werden solche Federelement im Bereich der Polsterungen eingesetzt, wo der Wunsch besteht, das Sitzen und Liegen für Menschen komfortabler, sicherer und gesünder zu gestalten. Hierbei bestehen Polsterungen aus einer oder mehreren Funktionsschichten, welche sich in ihren Komfort- und Stützeigenschaften unterscheiden und in aufeinander abgestimmten Kombinationen verwendet werden. Diese Polsterungen sollen für den Nutzer einen möglichst optimalen Komfort beim Liegen, Schlafen oder Sitzen erbringen und den anatomischen Anforderungen zum Erhalt der Gesundheit entsprechen. Dies erfordert im Allgemeinen bei Schlafsystemen eine relativ große Aufbauhöhe, was nachteilig für Gewicht, Platzbedarf und Kosten ist.

Die Funktionsschichten solcher Polster bestehen aus unterschiedlichen Materialien wie zum Beispiel Memory-Foam, Polyfoam, Latex, Naturfasern, Knickspaltgel, Textilien, Frottee, Watte, Federn aus Stahl oder Eisen, Schüttstoffen, Gas, Flüssigkeiten und weiteren mehr. Ein wichtiges Kriterium bezüglich der Anforderungen an die Funktionsschichten ist deren flächen- oder punktelastische Eigenschaft, die ihr Verhalten in Reaktion auf das Aufliegen von Körpern und deren auf die Polsterung einwirkenden Kräfte wesentlich bestimmt. Je nach Material und dessen geometrischer Anordnung lassen sie sich in flächenelastische und punktelastische Funktionsschichten unterscheiden.

Besonders punktelastisch ist eine Polsterung, wenn der ausgeübte Liegedruck überwiegend an dem Punkt abgefedert wird, an dem er entsteht. Eine größere Übertragung des Liegedrucks auf die um den Druckpunkt liegende Fläche soll bei einer punktelastischen Funktionsschicht hingegen nicht erfolgen.

Nach vorherrschender Meinung sollte eine Polsterung den Körper derart stützen, dass möglichst keine Zwischenräume zwischen Körper und Polsterung entstehen. Je höher auflösend eine punktelastische Polsterung ist, desto vorteilhafter wird diese Anforderung erfüllt.

Ein weiteres Kriterium für die tatsächliche Flächenelastizität einer Polsterung stellt der Polsterbezug dar. Ist dieser zu starr oder zu straff gespannt, kann er den punktuell auf die Oberfläche ausgeübten Druck nicht ebenso punktuell an die Funktionsschichten weitergeben. Dies hat den Nachteil, dass der Druck bereits durch den Polsterbezug auf die Fläche verteilt und somit die Punktelastizität einer Polsterung in ihrer Gesamtheit verringert wird.

Weiter erfordern Polsterungen mit schlechterer Punktelastizität eine spezielle Unterlage als Teil des Polstersystems, beispielsweise einen Lattenrost, damit sie neben den anatomischen Anforderungen auch den gewünschten Komfort erfüllen können. Dies hat Nachteile bei Systemabstimmung, Gewicht, gesamter Aufbauhöhe und Kosten.

Im Hinblick auf Lagerhaltung und Transport, sowie auch im spezifischen Segment von Outdoor-Anwendungen sind ein kleines Packmaß, ein geringes Gewicht und eine geringe Aufbauhöhe vorteilhaft. Dies steht im Widerspruch zu einem guten Schlafkomfort, der mit vielen marktüblichen Polstermöbeln, Schlaf-, insbesondere Outdoorpolsterungen wie Luftmatratzen, Schaummatratzen und dergleichen mehr nur bedingt erreicht wird.

Der wahrgenommene Komfort einer Polsterung wird im Allgemeinen durch die negativste Empfindung, also die unbequemste Stelle, definiert. Sie kann von unterschiedlichen Komfort-Faktoren, wie der Temperatur, oder der Luftfeuchtigkeit, aber auch der Körperhaltung oder Liegeposition, sowie spezifischen Drucckonzentrationen, beeinflusst werden.

So fühlt sich eine Polsterung, gerade bei langer Nutzung, umso bequemer an, je geringer der maximale Druck der Polsterung aller aufliegenden Stellen des Körpers ist.

Um einen möglichst hohen Langzeit-Komfort zu realisieren, gilt es, die vom aufliegenden Körper ausgeübte Gewichtskraft auf die Polsterung so zu verteilen, dass die Kraft pro Fläche möglichst gering ist.

Bei Polsterungen werden unter anderem folgende Konzepte verwendet, um dies zu erreichen.

Wenn bei konstanter Kraft die Auflagefläche vergrößert wird, verringert sich der Druck. Durch das Einsinken des aufliegenden Körpers in die Polsterung wird die Auflagefläche vergrößert und so eine Verteilung der vorhandenen Kräfte auf mehr Fläche erreicht.

Je gleichmäßiger die Kräfte auf eine gegebene Fläche verteilt werden, desto geringer ist der maximale Druck. Bei flächenelastischen Polsterungen werden die um die lokalen Druck-Maxima herum liegenden Stellen aufgrund ihrer gegenseitigen Kopplung bereits vorkomprimiert. Dies führt zu einer geringeren Ausübung von Gegenkräften der umliegenden Stellen, sodass lokale Druck-Maxima höher sind bzw. weniger entlastet werden.

Bei punktelastischen Polsterungen sind benachbarte Stellen weniger stark miteinander gekoppelt. Daher findet eine geringere Vorkompression der um die lokalen Druckmaxima gelegenen Stellen statt. So üben diese höhere Gegenkräfte auf den aufliegenden Körper aus, wodurch lokale Druck-Maxima kleiner sind bzw. entlastet werden.

Während das Thema der punktelastischen Polsterung etwa in der WO 2017/206961 A1 bereits angesprochen wird, wo mit einer Anzahl von Einzelpolstern gearbeitet wird, welche eine mechanische Unterkonstruktion besitzen um individuelle Belastungen einstellen zu können und die WO 2023/098892 A1 eine elastische turmförmige Konstruktion mit senkrechten Federelementen besitzt, stellt sich die vorliegende Erfindung die Aufgabe, ein Federelement anzugeben, welches als Einzelteil günstig hergestellt werden kann und eine große effektive Auflagefläche besitzt, eine Federanordnung bereitzustellen, welche ebenfalls als Einzelteil mit hochauflösender Punktelastizität günstig hergestellt werden kann, und sowohl eine modulare Erweiterung um weitere Federelemente und Federanordnungen erlaubt, als auch eine logistisch sinnvolle Lösung darstellt und ein Polster zu schaffen, welches ebenfalls eine hohe Punktelastizität besitzt und bei Bedarf unproblematisch auch nur teilweise ersetzt werden kann und erweiterbar ist.

Gelöst wird diese Aufgabe durch ein Federelement gemäß den Merkmalen des Anspruchs 1, durch eine Federanordnung gemäß den Merkmalen des nebengeordneten Anspruchs 9 und durch ein Polster gemäß den Merkmalen des nebengeordneten Anspruchs 11. Sinnvolle Ausgestaltungen sowohl des Federelements, als auch der Federanordnung und des Polsters können den sich jeweils anschließenden abhängigen Ansprüchen entnommen werden.

Vorgesehen ist insoweit in einem ersten Schritt ein Federelement, bestehend aus einer Mehrzahl geschlossener, jeweils einen Innenbereich umschließender Federrahmen, welche ausgehend von einer Basis übereinander liegend zu einem Federkörper verbunden sind. Ein solches Federelement ist erfindungsgemäß dadurch gekennzeichnet, dass die Größe jedes Federrahmens höchstens der Größe des Innenbereichs eines in Richtung der Basis benachbarten Federrahmens entspricht und die Federrahmen überlappungsfrei übereinander angeordnet sind.

Es ergibt sich hierdurch ein stabiles Federelement, welches nicht wie bei den meisten Federn üblich, lediglich eine ringförmige Abstützung erlaubt, sondern welches sich vielmehr auf dem gesamten Federkörper abstützen kann. Gleichzeitig ist ein solches Federelement allerdings im Gegensatz zum Stand der Technik unproblematisch im Wege eines Spritzgussverfahrens herstellbar, da aufgrund der zunehmenden Verjüngung der Federelemente von einer Basis weg und der gleichzeitigen überlappungsfreien Positionierung der Federrahmen Hinterschneidungen bei der Herstellung verhindert werden. Eine einfache und schnelle Produktion derartiger Federelemente ist dadurch möglich. Bei Kompression wird zusätzlich zur Oberkante eines zuoberst angeordneten Federrahmens die effektive Auflagefläche mit zunehmendem Grad der Kompression eines Federelements sich um den nächst darunter liegenden Federrahmen erweitert.

In vorteilhafter Ausgestaltung kann es hierbei vorgesehen sein, dass die Federrahmen wellenförmig ausgebildet sind, wobei vorzugsweise benachbarte Federrahmen gegeneinander so versetzt sind, dass jeweils ein Wellental eines Federrahmens einem Wellenberg eines in Richtung der Basis benachbarten Federrahmens zugewandt ist. Es ergibt sich in diesem Zusammenhang eine Netzstruktur, welche ihrerseits in einen Scheitelpunkt zuläuft. Aufgrund der Netzstruktur kann eine gleichmäßige Federwirkung rings um das Federelement bewirkt werden, welches zudem sehr stabil, langlebig dank einer hohen Dauerelastizität und belastbar ist. Durch eine geeignete Wahl des Materials, der Materialdicke und der Geometrie im Querschnitt des Federrahmens kann der Grad der Federwirkung zusätzlich beeinflusst werden. Die von der Netzstruktur gebildeten Maschen können hierbei sowohl freibleiben als auch von einer dünnen, hautartigen Materialschicht zumindest teilweise geschlossen sein. Dies stellt keine bevorzugte Ausgestaltung dar, ist in der Praxis aber nicht störend.

Bevorzugt ist es insbesondere, wenn benachbarte Federrahmen über wenigstens drei Verbindungsbrücken miteinander verbunden sind. Dies erlaubt eine definierte Abstützung und verhindert, dass das Federelement über zwei Verbindungsbrücken zur Seite kippt. Mehr als drei Verbindungsbrücken sind jedoch ebenfalls möglich. Es kann insbesondere sinnvoll sein, wenn der Federrahmen wellenförmig gestaltet ist und übereinander liegende Federrahmen versetzt sind, dass jeder Wellenberg mit einem benachbarten Wellental verbunden wird und umgekehrt, um die Stabilität der Anordnung möglichst groß werden zu lassen und den freischwingenden Anteil der Federrahmen in Federrichtung zu maximieren.

Weiter kann es in konkreter Ausgestaltung sinnvoll sein, wenn der Innenbereich eines am weitesten von der Basis entfernten Federrahmens von einer Kuppel überwölbt ist. Eine solche Kuppel erhöht nochmals deutlich die Auflagefläche auf dem Federelement und ermöglicht es, auch ohne Kompression des Federelements nicht nur auf dem Rand eines zuoberst liegenden Federrahmen abzustützen. Vielmehr kann auf diese Weise eine große Fläche für die Kraftübertragung zur Verfügung gestellt werden. Hierbei kann bevorzugt die Kuppel aus einer Mehrzahl von sternförmig angeordneten und vorzugsweise bogenförmig gewölbten Streben hergestellt sein. Auf diese Weise wird mit vergleichsweise wenig Material eine solche Kuppel geschaffen und deren Stabilität dennoch sichergestellt.

In konkreter Ausgestaltung der einzelnen Federrahmen kann es vorgesehen sein, dass diese oder ihre Projektion im Wesentlichen die Form eines regelmäßigen Vierecks oder Sechsecks aufweisen. Eine solche Formgebung erlaubt eine gitterförmige, insbesondere wabenförmige, Anordnung der Federelemente, so dass eine sehr zwischenraumsparende und allseits erweiterbare Konstruktion entsteht. Allerdings ist die Erfindung ausdrücklich nicht auf die Verwendung regelmäßiger Vierecke oder Sechsecke als Grundform der Federelemente festgelegt, sondern ermöglicht auch mehreckige und elliptische, insbesondere runde Grundformen. Ebenso können die Federrahmen eines Federelements geometrisch unterschiedlich ausgestaltet sein.

Ein besonderer Vorteil der vorliegenden Erfindung besteht darin, dass das Federelement als einstückiges Formgussteil, als Spritzgussteil, aus einem Thermoplasten oder aus einem Gießelastomer, insbesondere aus reaktiven, vorzugsweise additiv vernetzenden, Materialien, oder als einstückiges additives Werkstück hergestellt werden kann. Nur dadurch ist es möglich, dass eine Vielzahl miteinander verbundener Federelemente einstückig hergestellt werden können. Dies ist insbesondere aufgrund des Umstands, dass die Konstruktion Hinterschneidungen vollständig vermeidet und somit eine vergleichsweise einfache Form für die Herstellung genutzt werden kann, hilfreich. Soweit im Folgenden nur von Spritzguss die Rede ist, so soll dies so verstanden sein, dass eines der oben genannten Herstellungsverfahren Anwendung findet.

Ergänzend zu dem Federkörper als solchem kann vorgesehen sein, dass dem Federkörper ein flächiges Federfundament zugeordnet ist, welches mit der Basis des Federkörpers verbunden ist und welches vorzugsweise Verbindungselemente zur Verbindung mit weiteren Federfundamenten aufweist. In einem solchen Fall werden die einzelnen Federkörper mit ihrer Basis an dem Federfundament, beispielsweise in Form eines Gitters, einer Matte oder eines Maschenrahmens, befestigt. Derartige Einheiten von einem Federfundament mit einem oder mehreren Federelementen lassen sich leicht auch in größeren Mengen handhaben und gemeinsam verarbeiten und transportieren.

Zusätzlich ermöglicht ein Federfundament eine nachträgliche Anpassung der Fläche der Federanordnung oder des gesamten Polsters durch Zuschneiden des Federfundaments. Dies ist mit der nachfolgenden Variante einer Federanordnung mit einem Verbundrahmen nicht ohne Verlust der Seitenstabilität möglich.

Ebenfalls ist es aber möglich, auf die Federfundamente als solche zu verzichten und stattdessen die Federelemente direkt an ihrem Federkörper, insbesondere im Bereich der Basis, zu verbinden. Dann kann vorgesehen sein, dass unter Zwischenlage von die Basis der jeweiligen Federelemente verbindender Verbindungsstücke diese miteinander verbunden und vorzugsweise gemeinsam von einem Verbundrahmen umgriffen sind, wobei der Verbundrahmen höchst vorzugsweise Verbindungselemente zur Verbindung mit weiteren Verbundrahmen aufweist. Der Verbundrahmen, soweit er vorgesehen wird, kann die Funktion des Federfundaments einnehmen und dafür sorgen, dass eine Handhabbarkeit mehrerer Federelemente auf einmal ermöglicht wird. Die Verbindungselemente können hierbei mechanische Verbinder sein, welche Ausnehmungen zum Einstecken oder Überstülpen von Teilen benachbarter Federelemente aufweisen.

Weiter können allerdings auch mehrschichtige Lösungen hergestellt werden, indem Federelemente horizontal gespiegelt mit ihren Basen aneinander befestigt werden oder, insbesondere versetzt, aufeinander gestapelt werden. Hieraus können sich weitere Anwendungen ergeben, bei denen ein längerer Federweg benötigt wird.

Neben der Herstellung und Verwendung reiner Federelemente und Federanordnungen daraus sieht die Erfindung auch ein Polster vor, welches wenigstens ein Federelement gemäß einem der Ansprüche 1 bis 8 und/oder wenigstens eine Federanordnung gemäß einem der Ansprüche 9 oder 10 umfasst, wobei dem wenigstens einen Federelement und/oder der wenigstens einen Federanordnung wenigstens ein Polsterelement zugeordnet ist, welches das wenigstens eine Federelement und/oder die wenigstens eine Federanordnung zumindest im Wesentlichen übergreift.

Hierbei kann sinnvollerweise das Polsterelement eine geeignete Ausnehmung aufweisen, welche das wenigstens eine Federelement abbildet, so dass eine innige Verbindung zwischen dem Polsterelement und dem Federelement oder der Federanordnung hergestellt werden kann.

Dies bietet den Vorteil, dass über die Maximierung der Kontaktfläche die auf das Polsterelement ausgeübte Kraft auch ohne Kompression der Feder nicht nur auf dem zuoberst liegenden Federrahmen und/oder dessen Kuppel, sondern auf alle Federrahmen wirkt.

Die Unterteilung des Posters in Polsterfragmente, welche vorzugsweise jeweils einem Federelement zugeordnet sind, verstärkt die Punktelastizität des Polsters nochmals deutlich, weil eine Ableitung von Kräften zur Seite hin hier nicht mehr zu erwarten ist. Für die Herstellung können vorteilhafterweise mehrere Polsterfragmente an ausgewählten Stellen, beispielsweise nahe der Basen der Federelemente, miteinander verbunden sein. Es bietet sich an, wenn die Polsterfragmente in der gleichen Grundform vorgesehen werden, wie das darunterliegende Federelement oder die Federanordnung, sofern ein Polsterfragment für eine ganze Federanordnung vorgesehen wird.

Zunächst kann vorgesehen sein, dass das Polsterelement aus einem Polstermaterial wie beispielsweise Schaumstoff, Naturkautschuk, Memoryfoam, Silikon, oder Latex hergestellt ist. Für die Ausgestaltung des Polsterelements, sofern vorgesehen, bietet die Erfindung im Wesentlichen drei Optionen an.

In einer ersten Option wird ein Polsterelement angebracht, welches an der Unterseite Ausnehmungen zur Aufnahme des wenigstens einen Federelements und/oder der wenigstens einen Federanordnung aufweist. Dieses Polsterelement kann auch mehrschichtig aufgebaut sein, wobei eine untere Polsterschicht eben mit den Federelementen abschließt und wenigstens eine obere Polsterschicht darauf aufbaut. Diese Konstruktionsweise ermöglicht eine Herstellung passgenauer Polsterelemente auch aus Blockschaum. Durch das Abschließen der unteren Polsterschicht auf Höhe der Federelemente können die entsprechenden, zum Beispiel konischen, Ausnehmungen einfach aus dem Material der Polsterschicht herausgeschnitten werden. Dies ist bei den nachfolgenden Optionen nicht ohne weiteres möglich. Hierdurch erfolgt eine Auflage des Polsterelements auf dem wenigstens einen Federelement und/oder der wenigstens einen Federanordnung, wobei unterhalb des Federelements in dem von dem Federelement überwölbten Raumbereich kein Polstermaterial angeordnet ist. Die wenigstens eine obere Polsterschicht kann zur Optimierung der Punktelastizität in Polsterfragmente unterteilt sein.

In einer zweiten Option bietet das Polsterelement wie auch in der vorherigen Variante auf der Unterseite Ausnehmungen zur Aufnahme des wenigstens einen Federelements und/oder der wenigstens einen Federanordnung. Jedoch kann das Polsterelement hier lediglich aus einer Polsterschicht gebildet sein und über die Höhe des wenigstens einen Federelements oder der wenigstens einen Federanordnung hinausragen. Hierdurch erfolgt eine Auflage des Polsterelements auf dem wenigstens einen Federelement und/oder wenigstens einer Federanordnung, bei dem unterhalb des Federelements, in dem von dem Federelement überwölbten Raumbereich, kein Polstermaterial angeordnet ist, was im Vergleich zur ersten Option eine komplexere Geometrie der Ausnehmung des Polsterelements erfordert. Auch hier kann das Polsterelement oberhalb und zwischen den Federelementen in Polsterfragmente unterteilt sein.

In einer dritten Option wird das mindestens eine Federelement und/oder die mindestens eine Federanordnung in ein Schäumwerkzeug eingelegt und direkt eingeschäumt. Hierdurch entsteht ein Polsterelement, welches das wenigstens eine Federelement oder die wenigstens eine Federanordnung zumindest teilweise umschließt. In diesem Fall dringt der Schaumstoff sowohl unter, als auch über die Federelemente und umschließt diese vorzugsweise allseitig, wobei auch der von den Federelementen überwölbte Raum zumindest teilweise gefüllt wird. Insbesondere kann der von den Federelementen überwölbte Raum auch vollständig mit Polstermaterial gefüllt sein.

Das Polsterelement kann jedoch, wie gehabt, durch nachträgliches Schneiden oder bereits durch die Ausgestaltung des Schäumwerkzeugs in Polsterfragmente unterteilt werden. Wenn mehr als ein Federelement oder mehr als eine Federanordnung zusammen umschäumt werden, kann vorzugsweise eine Gewebeschicht mit in das Schäumwerkzeug eingelegt werden, welche die Federelemente oder die Federanordnungen direkt im Schäumprozess langanhaltend, nachaltig und stabil miteinander verbindet.

Um eine logistisch besonders vorteilhafte Lösung zu schaffen mehrere Polsterelemente raumsparend zu komprimieren, kann es vorgesehen sein, dass dem wenigstens einen Federelement und/oder der wenigstens einen Federanordnung Rastelemente und/oder Gegenrastelemente zugeordnet sind, welche eine Verbindung mit Gegenrastelementen und/oder Rastelementen von Federelementen und/oder Federanordnungen eines weiteren, gleichartigen Polsters unter Stauchung wenigstens eines zwischenliegenden Polsterelements erlauben. Werden dabei Federelemente oder Federanordnungen so übereinandergelegt, dass ihre Wölbungen ineinandergreifen, können die jeweiligen Federelemente mit ihren Rastmitteln in die Gegenrastmittel des Gegenstücks einrasten und auf diese Weise mehrere Federelemente, Federanordnungen oder Polster miteinander verbinden, wobei im Falle eines Polsters das zu einem unten liegenden Polster gehörende Polsterelement selbst zwischen seinem eigenen und dem darüberliegenden Federelement gestaucht und fixiert wird.

Die vorstehend beschriebene Erfindung wird im Folgenden anhand eines Ausführungsbeispiels näher erläutert.

Es zeigen
- Figur 1: ein Federelement mit mehreren Federrahmen und einer Kuppel in perspektivischer Darstellung,
- Figur 2: einen Federrahmen eines Federelements in perspektivischer Darstellung,
- Figur 3: das Federelement gemäß Figur 1 in einer Draufsicht,
- Figur 4: ein Polster mit einer Federanordnung aus drei über ein Federfundament verbundenen Federelementen in einer seitlichen Querschnittsdarstellung, sowie
- Figur 5: zwei Polster mit einer Federanordnung aus jeweils drei direkt miteinander verbundenen Federelementen mit Rastelementen und Gegenrastelementen.

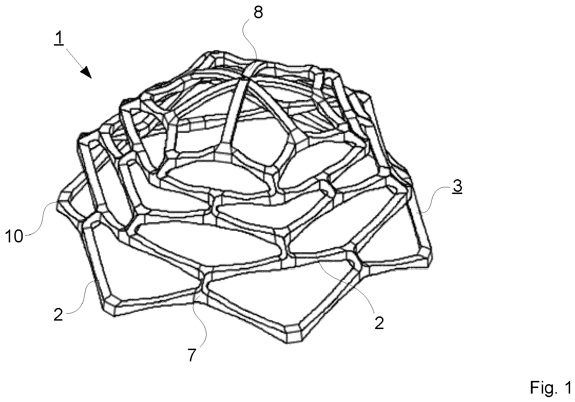

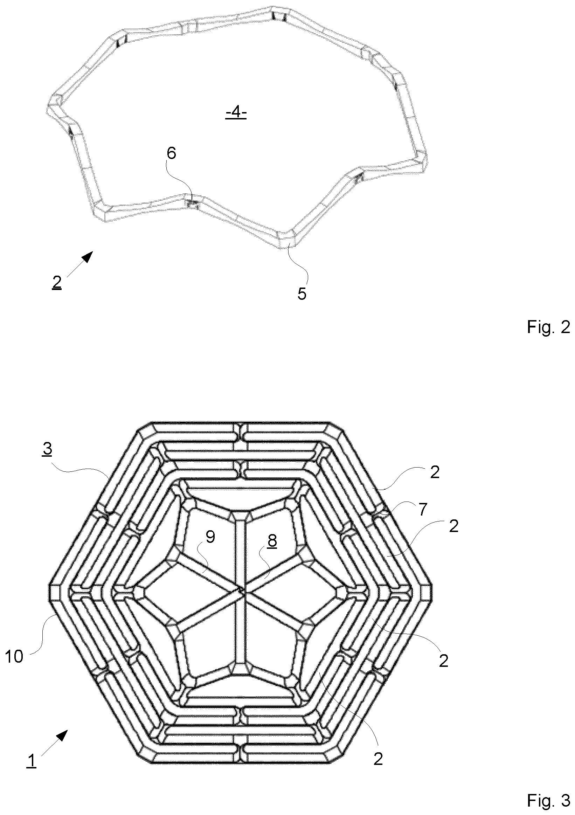

Figur 1 zeigt ein Federelement 1, welches aus insgesamt fünf Federrahmen 2 gemäß Figur 2 aufgebaut ist. Figur 3 lässt hierbei erkennen, dass vier Federrahmen 2 im vorliegenden Beispiel in der Projektion auf die Ebene sechseckig sind, wobei der Federrahmen 2 jedoch derart gewellt ist, dass jeweils die Kantenecken als Wellentäler 5 und die Kantenmitten als Wellenberge 6 ausgestaltet sind. Die Federrahmen 2 sind hierbei geschlossen aufgebaut und umschlie-ßen einen Innenbereich 4.

Wie aus der Figur 3 hervorgeht, weist jeweils ein äußerer Federrahmen 2 einen Innenbereich 4 auf, welcher größer ist als der nächst höher gelegene Federrahmen 2. Auch findet bei der Anordnung der Federrahmen 2 keine Überlappung statt, so dass bei der Konstruktion des Federelements 1 keine Hinterschneidungen entstehen und das Federelement 1 unproblematisch als Spritzgussteil hergestellt werden kann.

Durch das Übereinanderlegen von mehreren Federrahmen 2 entsteht, wie in Figur 1 ersichtlich, ein gewölbtes, im Querschnitt weitgehend parabelförmiges, Federelement 1. Die Federrahmen 2 sind dabei jeweils so versetzt, dass jeweils ein Wellenberg 6 eines unteren Federrahmens 2 auf ein Wellental 5 des nächst höheren Federrahmens 2 trifft, so dass ausgehend von einer unteren Basis 10 sich eine Maschenstruktur ausbildet. Im Beispiel sind fünf jeweils versetzte Federrahmen 2 vorgesehen, darüber wölbt sich dann eine Kuppel 8 aus bogenförmigen Streben 9, welche sich in einem höchsten Punkt treffen. Eine solche Kuppel 8 erlaubt es, viel Kraft in das Federelement 1 einzukoppeln und stellt eine große effektive Angriffsfläche für Lasten auf das Federelement 1 bereit. Die leicht federnde Kuppel 8 schränkt die Bewegungsfreiheit durch Kopplung der gegenüberliegenden Seiten des darunterliegenden Federrahmens 2 ein, wodurch eine höhere Dauerelastizität besteht.

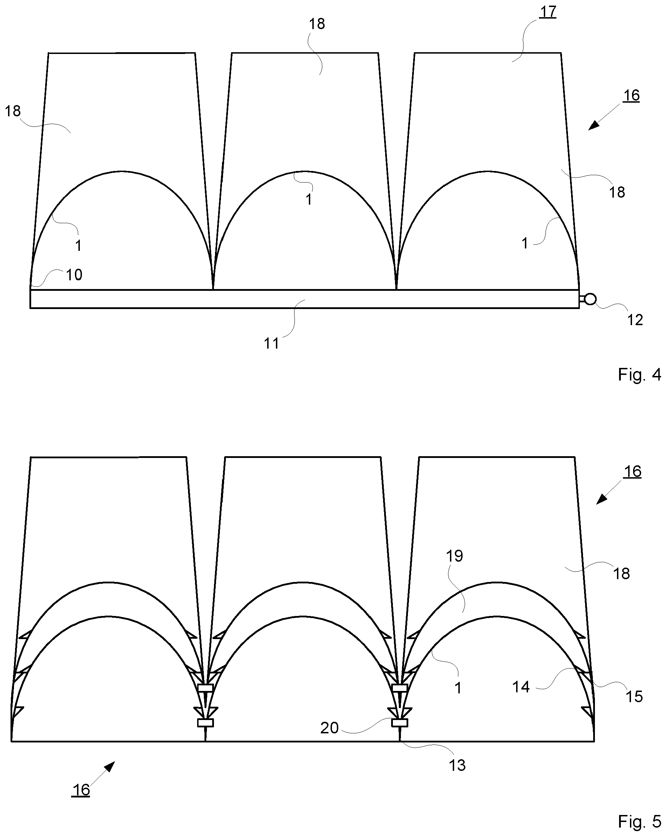

Ein erstes, einfaches Polster 16 ist in Figur 4 gezeigt. Die Federelemente 1 sind hierbei lediglich durch parabelförmige Gewölbe angedeutet, welche in dem Schaumstoff eines Polsterelements 17 eingeschäumt sind. Mit ihrer Basis 10 sind die Federelemente 1 hier mit einem Federfundament 11 verbunden, über welches mehrere Federelemente 1 unproblematisch miteinander gehandhabt werden können. Oberhalb der Federelemente 1 setzt sich das Polsterelement 17 in mehreren Polsterfragmenten 18 fort, wobei jedes Polsterfragment 18 über einem Federelement 1 aufragt und mit diesem eine zu allen Seiten unabhängige und damit sehr punktelastische Auflage schafft. Mehrere Federfundamente 11 können bei Bedarf mithilfe geeigneter Verbindungselemente 12 untereinander zu einem Flächenverbund zusammengeschlossen werden und nach Bedarf größere Polster 16 bilden.

Eine Abwandlung eines solches Polsters 16 ist in der Figur 5 gezeigt, wo das Polsterelement lediglich auf die Federelemente 1 aufgelegt ist. Die Federelemente 1 sind hier nicht durch ein gemeinsames Federfundament 11 verbunden, sondern über Verbindungsstücke 20, welche die Federelemente 1 aneinander fixieren. Ein solcher Verbund kann unproblematisch in alle Richtungen erweitert werden.

Werden nun zwei Polster 16 aufeinandergelegt, so wird ein über einer unteren Federanordnung 13 angebrachtes Polsterelement gestaucht. Das zwischenliegende Polsterelement 19 drückt sich dann von unten in die nun freigehaltenen Wölbungen der Federelemente 1 hinein und mithilfe ineinandergreifender Rastelemente 14 an der Außenseite der Federelemente 1 und Gegenrastelemente 15 an deren Innenseite können diese im gestauchten Zustand des zwischenliegenden Polsterelements 19 arretiert werden. Hierdurch ist eine sehr Platzsparende Aufbewahrung mehrerer gestapelter Polster 16 möglich. Eine Fixierung aufeinandergestapelter Polsterelemente ist auch durch ein Zugband möglich.

Vorstehend beschrieben sind somit ein Federelement sowie eine Federanordnung, welche günstig hergestellt werden können und eine große effektive Auflagefläche besitzen, wobei die elastische Federanordnung sowohl eine modulare Erweiterung um weitere Federanordnungen und Federelemente erlaubt, als auch eine logistisch sinnvolle Lösung darstellt und ein Polster, welches ebenfalls eine hohe Punktelastizität besitzt und bei Bedarf unproblematisch erweitert oder ersetzt werden kann.

### BEZUGSZEICHENLISTE

- 1: Federelement
- 2: Federrahmen
- 3: Federkörper
- 4: Innenbereich
- 5: Wellental
- 6: Wellenberg
- 7: Verbindungsbrücke
- 8: Kuppel
- 9: Streben
- 10: Basis
- 11: Federfundament
- 12: Verbindungselement
- 13: Federanordnung
- 14: Rastelement
- 15: Gegenrastelement
- 16: Polster
- 17: Polsterelement
- 18: Polsterfragment
- 19: zwischenliegendes Polsterelement
- 20: Verbindungsstück

## Patentansprüche

1. Federelement bestehend aus einer Mehrzahl geschlossener, jeweils einen Innenbereich umschließender Federrahmen (2), welche von einer Basis (10) ausgehend übereinander liegend zu einem Federkörper (3) verbunden sind,
**dadurch gekennzeichnet, dass** die Größe jedes Federrahmens (2) höchstens der Größe des Innenbereichs (4) eines in Richtung der Basis (10) benachbarten Federrahmens (2) entspricht und die Federrahmen (2) überlappungsfrei übereinander angeordnet sind.

2. Federelement gemäß Anspruch 1, **dadurch gekennzeichnet, dass** die Federrahmen (2) wellenförmig ausgebildet sind, wobei vorzugsweise benachbarte Federrahmen (2) gegeneinander so versetzt sind, dass jeweils ein Wellental (5) eines Federrahmens (2) einem Wellenberg (6) eines in Richtung der Basis (10) benachbarten Federrahmens (2) zugewandt ist.

3. Federelement gemäß einem der Ansprüche 1 oder 2, **dadurch gekennzeichnet, dass** benachbarte Federrahmen (2) über wenigstens drei Verbindungsbrücken (7) miteinander verbunden sind, wobei benachbarte Federrahmen (2) und Verbindungsbrücken (7) Zwischenräume einschließen, welche entweder freigehalten oder zumindest teilweise mit einer, vorzugsweise gegenüber den Federrahmen (2) dünnen, Materialschicht gefüllt sind.

4. Federelement gemäß einem der vorhergehenden Ansprüche, **dadurch gekennzeichnet, dass** der Innenbereich (4) eines am weitesten von der Basis (10) entfernten Federrahmens (2) von einer Kuppel (8) überwölbt ist.

5. Federelement gemäß Anspruch 4, **dadurch gekennzeichnet, dass** die Kuppel (8) aus einer Mehrzahl von sternförmig angeordneten und vorzugsweise bogenförmig gewölbten Streben (9) hergestellt ist.

6. Federelement gemäß einem der vorhergehenden Ansprüche, **dadurch gekennzeichnet, dass** die Federrahmen (2) oder ihre Projektion im Wesentlichen die Form eines regelmäßigen Vierecks oder Sechsecks aufweisen.

7. Federelement gemäß einem der vorhergehenden Ansprüche, welches als einstückiges Formgussteil, als Spritzgussteil, aus einem Thermoplasten oder aus einem Gießelastomer, insbesondere aus reaktiven, vorzugsweise additiv vernetzenden, Materialien, oder als einstückiges additives Werkstück hergestellt ist.

8. Federelement gemäß einem der vorhergehenden Ansprüche, **dadurch gekennzeichnet, dass** dem Federkörper (3) ein flächiges Federfundament (11) zugeordnet ist, welches mit der Basis (10) des Federkörpers (3) verbunden ist und welches vorzugsweise Verbindungselemente (12) zur Verbindung mit weiteren Federfundamenten (11) aufweist.

9. Federanordnung umfassend eine Mehrzahl miteinander verbundener Federelemente (1) gemäß einem der Ansprüche 1 bis 7, welche unter Zwischenlage von die Basis (10) der jeweiligen Federelemente (1) verbindender Verbindungsstücke (20) verbunden und vorzugsweise gemeinsam von einem Verbundrahmen umgriffen sind, wobei der Verbundrahmen höchst vorzugsweise Verbindungselemente zur Verbindung mit weiteren Verbundrahmen aufweist.

10. Federanordnung umfassend eine Mehrzahl miteinander verbundener Federelemente gemäß einem der Ansprüche 1 bis 7, welche durch ein gemeinsames flächiges Federfundament (11) verbunden sind, welches mit der Basis (10) der Federkörper (2) verbunden ist und welches vorzugsweise Verbindungselemente (12) zur Verbindung mit weiteren Federfundamenten (11) aufweist.

11. Polster umfassend wenigstens ein Federelement (1) gemäß einem der Ansprüche 1 bis 8 und/oder wenigstens eine Federanordnung (13) gemäß einem der Ansprüche 9 oder 10, wobei dem wenigstens einen Federelement (1) und/oder der wenigstens einen Federanordnung (13) wenigstens ein Polsterelement (17) zugeordnet ist, welches das wenigstens eine Federelement (1) und/oder die wenigstens eine Federanordnung (13) zumindest im Wesentlichen übergreift.

12. Polster gemäß Anspruch 11, **dadurch gekennzeichnet, dass** das Polsterelement (17) in Polsterfragmente (18) unterteilt ist, welche vorzugsweise jeweils einem von mehreren Federelementen (1) zugeordnet sind.

13. Polster gemäß einem der Ansprüche 11 oder 12, **dadurch gekennzeichnet, dass** das Polsterelement (17) vorzugsweise aus einem Schaumstoff hergestellt ist, wobei das Polsterelement (17) Ausnehmungen zur Aufnahme des wenigstens einen Federelements (1) und/oder der wenigstens einen Federanordnung (13) aufweist.

14. Polster gemäß einem der Ansprüche 11 oder 12, **dadurch gekennzeichnet, dass** das Polsterelement (17) aus einem Schaumstoff hergestellt ist, in welchen das wenigstens eine Federelement (1) und/oder die wenigstens eine Federanordnung (13) eingeschäumt ist.

15. Polster gemäß einem der Ansprüche 11 bis 14, **dadurch gekennzeichnet, dass** dem wenigstens einen Federelement (1) und/oder der wenigstens einen Federanordnung (13) Rastelemente (14) und/oder Gegenrastelemente (15) zugeordnet sind, welche eine Verbindung mit Gegenrastelementen (15) und/oder Rastelementen (14) von Federelementen (1) und/oder Federanordnungen (13) eines weiteren, gleichartigen Polsters (16) unter Stauchung wenigstens eines zwischenliegenden Polsterelements (19) erlauben.

## Geänderte Patentansprüche

### Geänderte Patentansprüche gemäss Regel 137(2) EPÜ.

1. Federelement bestehend aus einer Mehrzahl geschlossener, jeweils einen Innenbereich umschließender Federrahmen (2), welche von einer Basis (10) ausgehend übereinander liegend zu einem Federkörper (3) verbunden sind, wobei
die Größe jedes Federrahmens (2) höchstens der Größe des Innenbereichs (4) eines in Richtung der Basis (10) benachbarten Federrahmens (2) entspricht und die Federrahmen (2) überlappungsfrei übereinander angeordnet sind,
**dadurch gekennzeichnet, dass** der Innenbereich (4) eines am weitesten von der Basis (10) entfernten Federrahmens (2) von einer Kuppel (8) überwölbt ist und die Kuppel (8) aus einer Mehrzahl von sternförmig angeordneten und vorzugsweise bogenförmig gewölbten Streben (9) hergestellt ist.

2. Federelement gemäß Anspruch 1, **dadurch gekennzeichnet, dass** die Federrahmen (2) wellenförmig ausgebildet sind, wobei vorzugsweise benachbarte Federrahmen (2) gegeneinander so versetzt sind, dass jeweils ein Wellental (5) eines Federrahmens (2) einem Wellenberg (6) eines in Richtung der Basis (10) benachbarten Federrahmens (2) zugewandt ist.

3. Federelement gemäß einem der Ansprüche 1 oder 2, **dadurch gekennzeichnet, dass** benachbarte Federrahmen (2) über wenigstens drei Verbindungsbrücken (7) miteinander verbunden sind, wobei benachbarte Federrahmen (2) und Verbindungsbrücken (7) Zwischenräume einschließen, welche entweder freigehalten oder zumindest teilweise mit einer, vorzugsweise gegenüber den Federrahmen (2) dünnen, Materialschicht gefüllt sind.

4. Federelement gemäß einem der vorhergehenden Ansprüche, **dadurch gekennzeichnet, dass** die Federrahmen (2) oder ihre Projektion im Wesentlichen die Form eines regelmäßigen Vierecks oder Sechsecks aufweisen.

5. Federelement gemäß einem der vorhergehenden Ansprüche, welches als einstückiges Formgussteil, als Spritzgussteil, aus einem Thermoplasten oder aus einem Gießelastomer, insbesondere aus reaktiven, vorzugsweise additiv vernetzenden, Materialien, oder als einstückiges additives Werkstück hergestellt ist.

6. Federelement gemäß einem der vorhergehenden Ansprüche, **dadurch gekennzeichnet, dass** dem Federkörper (3) ein flächiges Federfundament (11) zugeordnet ist, welches mit der Basis (10) des Federkörpers (3) verbunden ist und welches vorzugsweise Verbindungselemente (12) zur Verbindung mit weiteren Federfundamenten (11) aufweist.

7. Federanordnung umfassend eine Mehrzahl miteinander verbundener Federelemente (1), bestehend aus einer Mehrzahl geschlossener, jeweils einen Innenbereich umschließender Federrahmen (2), welche von einer Basis (10) ausgehend übereinander liegend zu einem Federkörper (3) verbunden sind, wobei die Größe jedes Federrahmens (2) höchstens der Größe des Innenbereichs (4) eines in Richtung der Basis (10) benachbarten Federrahmens (2) entspricht und die Federrahmen (2) überlappungsfrei übereinander angeordnet sind,wobei die Federelemente (1) unter Zwischenlage von die Basis (10) der jeweiligen Federelemente (1) verbindender Verbindungsstücke (20) verbunden und vorzugsweise gemeinsam von einem Verbundrahmen umgriffen sind, wobei der Verbundrahmen höchst vorzugsweise Verbindungselemente zur Verbindung mit weiteren Verbundrahmen aufweist.

8. Federanordnung umfassend eine Mehrzahl miteinander verbundener Federelemente (1), bestehend aus einer Mehrzahl geschlossener, jeweils einen Innenbereich umschließender Federrahmen (2), welche von einer Basis (10) ausgehend übereinander liegend zu einem Federkörper (3) verbunden sind, wobei die Größe jedes Federrahmens (2) höchstens der Größe des Innenbereichs (4) eines in Richtung der Basis (10) benachbarten Federrahmens (2) entspricht und die Federrahmen (2) überlappungsfrei übereinander angeordnet sind, welche durch ein gemeinsames flächiges Federfundament (11) verbunden sind, welches mit der Basis (10) der Federkörper (2) verbunden ist und welches vorzugsweise Verbindungselemente (12) zur Verbindung mit weiteren Federfundamenten (11) aufweist.

9. Polster umfassend wenigstens eine Federanordnung (13) gemäß einem der Ansprüche 7 oder 8, wobei der wenigstens einen Federanordnung (13) wenigstens ein Polsterelement (17) zugeordnet ist, welches das wenigstens eine Federelement (1) und/oder die wenigstens eine Federanordnung (13) zumindest im Wesentlichen übergreift,
**dadurch gekennzeichnet, dass** das Polsterelement (17) in Polsterfragmente (18) unterteilt ist, welche vorzugsweise jeweils einem von mehreren Federelementen (1) zugeordnet sind.

10. Polster gemäß Anspruch 9, **dadurch gekennzeichnet, dass** das Polsterelement (17) vorzugsweise aus einem Schaumstoff hergestellt ist, wobei das Polsterelement (17) Ausnehmungen zur Aufnahme der wenigstens einen Federanordnung (13) aufweist.

11. Polster gemäß Anspruch 9, **dadurch gekennzeichnet, dass** das Polsterelement (17) aus einem Schaumstoff hergestellt ist, in welchen die wenigstens eine Federanordnung (13) eingeschäumt ist.

12. Polster gemäß einem der Ansprüche 9 bis 11, **dadurch gekennzeichnet, dass** dem wenigstens einen Federelement (1) und/oder der wenigstens einen Federanordnung (13) Rastelemente (14) und/oder Gegenrastelemente (15) zugeordnet sind, welche eine Verbindung mit Gegenrastelementen (15) und/oder Rastelementen (14) von Federelementen (1) und/oder Federanordnungen (13) eines weiteren, gleichartigen Polsters (16) unter Stauchung wenigstens eines zwischenliegenden Polsterelements (19) erlauben.
